# EUROPÄISCHE PATENTSCHRIFT

(11) **EP 0 470 403 B1**
(45) Veröffentlichungstag und Bekanntmachung des Hinweises auf die Patenterteilung: **26.04.1995**
(21) Anmeldenummer: 91111845.3
(22) Anmeldetag: 16.07.1991
(51) Int. Cl.: H01H 13/70, H01H 13/02, H01H 9/16

(54) **Tastatur-und Anzeigenbeleuchtung**
Keyboard and legend lighting
Eclairage pour clavier et légende

(30) Priorität: 07.08.1990 DE 4025048
(43) Veröffentlichungstag der Anmeldung: 12.02.1992
(73) Patentinhaber: SIEMENS AKTIENGESELLSCHAFT, 80333 München (DE)
(72) Erfinder: Peters, Rainer, W-8025 Unterhaching (DE); Hettrich, Roland, W-8061 Röhrmoos (DE); Prohaska, Bernd, W-8031 Gilching (DE); Koch, Georg, W-8044 Unterschleissheim (DE)

(56) Entgegenhaltungen:
- EP-A- 0 196 633
- BE-A- 902 377

## Beschreibung

Die Erfindung bezieht sich auf eine Tastatur- und Anzeigenbeleuchtung für einen Telefonapparat mit beleuchtetem Tastatur- und Anzeigenfeld; siehe z.B. EP-A- 0 196 633.

Ein Gerät, das zur Bedienung eine Tastatur bzw. Tastatur und Anzeige benötigt, soll, um auch im Dunkeln bedienbar zu sein, eine Tastaturbeleuchtung bzw. eine Tastatur- und Anzeigenbeleuchtung besitzen. Der für diese Beleuchtung zusätzlich notwendige Strom verkürzt beim Batteriebetrieb die Betriebszeiten des Gerätes nicht unerheblich.

Um diesem Problem wirksam zu begegnen, kann man zum einen die Beleuchtung zeitweilig ganz ausschalten und damit den Stromverbrauch für die Beleuchtung komplett unterbinden. Im Bedarfsfall ist dann die Beleuchtung wieder einzuschalten, wozu bei Dunkelheit zum Erkennen der betreffenden Tasten zunächst Licht erforderlich ist.

Ein anderer Weg, bei dem mit eingeschalteter Beleuchtungsfunktion die Beleuchtung von Tastatur und Anzeige nach dem Drücken einer beliebigen Taste eingeschaltet und nach Verstreichen einer bestimmten Zeit automatisch wieder ausgeschaltet wird, hat den Nachteil, daß die erste Taste erstmals blind gedrückt werden muß, was leicht zur Fehlbedienung des Gerätes führt. Da außerdem die Geräte üblicherweise keinen Lichtsensor aufweisen, wird bei Tageslicht ebenfalls die Beleuchtung bei jedem Tastendruck eingeschaltet, was vor allem bei längeren Bedienprozeduren (z.B. Nummern oder Namen programmieren) die Betriebszeit reduziert.

Der Erfindung liegt die Aufgabe zugrunde, für eine Einrichtung der eingangs genannten Art eine Lösung anzugeben für eine stromsparende Ausführung der Beleuchtung.

Diese Aufgabe wird gemäß der Erfindung in der Weise gelöst, daß eine einzige, normalerweise dem Ein- und Ausschalten des Gerätes dienende Taste dauerhaft beleuchtet ist und diese Taste (Ein/Aus-Taste) so ausgeführt ist, daß bei kurzer Betätigung die gesamte Beleuchtung für die von einem Beleuchtungstimer vorgegebene Zeit eingeschaltet wird und das Ausschalten des Gerätes durch einen langen Tastimpuls erfolgt.

Vorteilhafte Ausgestaltungen und Weiterbildungen des Erfindungsgegenstandes sind in den Unteransprüchen angegeben.

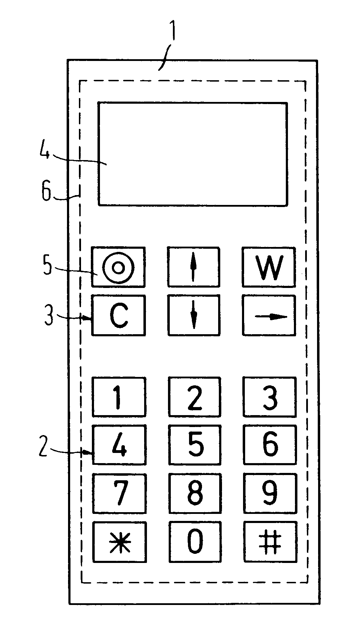

Nachstehend wird die Erfindung anhand eines in der Zeichnung dargestellten Ausführungsbeispieles näher erläutert.

Die Figur zeigt eine Tastatur- und Anzeigenbeleuchtung für einen Telefonapparat, der als Handheld ausgebildet ist.

Der in der Figur gezeigte Telefonapparat ist in einer Draufsicht dargestellt, wobei das Gerät selbst mit 1 bezeichnet ist. Im unteren Bereich der Oberseite des Telefonapparates ist ein Nummerntastenfeld 2 angeordnet, im mittleren Bereich ein Funktionstastenfeld 3 und im oberen Bereich ein Anzeigenteil (Display) 4. Innerhalb des Funktionstastenfeldes 3 ist die für das Ein- und Ausschalten des Gerätes vorgesehene Taste 5 angeordnet. Nummerntastenfeld 2, Funktionstastenfeld 3 und Anzeigeteil 4 sind insgesamt von einer strichlierten Linie eingerahmt, die den Bereich 6 bezeichnet, der die Tastatur- und Anzeigenbeleuchtung enthält.

Erfindungsgemäß ist vorgesehen, daß eine einzige Taste, nämlich die, mit der das Gerät normalerweise ein- bzw. ausgeschaltet wird, dauerhaft beleuchtet wird. Die Ein/Aus-Funktion ist so ausgeführt, daß das Ausschalten einen langen Tastimpuls benötigt (z.B. 1 sec) während bei einer kurzen Betätigung der Taste die Beleuchtung für die gesamte Tastatur und das Display für die von einem Beleuchtungstimer vorgegebene Zeit eingeschaltet wird. Zudem signalisiert die beleuchtete Ein/Aus-Taste 5 im Dunkeln, daß das Gerät noch eingeschaltet ist, was ansonsten nicht erkennbar wäre, wenn das Gerät keine oder nur eine passive (z.B.: LC) Anzeige besitzen würde.

Die Beleuchtung der anderen Tasten und der Anzeige wird wie folgt gesteuert: Ist die Beleuchtungsfunktion ausgeschaltet, so kann man mit der Ein/Aus-Taste 5 die Beleuchtung für die vom Beleuchtungstimer vorgegebene Zeit einschalten. Bei Tageslicht wird die Benutzung der Ein/Aus-Taste zur Lichtsteuerung nicht erforderlich sein.

Bei eingeschalteter Beleuchtungsfunktion kann man mit jeder Taste die Beleuchtung für die vom Beleuchtungstimer vorgegebene Zeit einschalten. Zur Vermeidung von Fehlbedienungen empfiehlt es sich hier aber auch, die Beleuchtung mit der Ein/Aus-Taste zu steuern.

Beim Einschalten des Gerätes wird die Beleuchtung zunächst erst einmal eingeschaltet, so daß der Benutzer auch im Dunkeln genügend Zeit hat, um z.B. die Beleuchtungsfunktion einzuschalten.

## Patentansprüche

1. Tastatur- und Anzeigenbeleuchtung für einen Telefonapparat mit beleuchtetem Tastatur- und Anzeigenfeld, dadurch **gekennzeichnet**, daß eine einzige, normalerweise dem Ein- und Ausschalten des Telefonapparates dienende Taste (5) dauerhaft beleuchtet ist und diese Taste (Ein/Aus-Taste) so ausgeführt ist, daß bei kurzer Betätigung die gesamte Beleuchtung für die von einem Beleuchtungstimer vorgegebene Zeit eingeschaltet wird und das Ausschalten des Telefonapparates durch einen langen Tastimpuls erfolgt.

2. Tastatur und Anzeigenbeleuchtung nach Anspruch 1, dadurch **gekennzeichnet**, daß die Beleuchtung der anderen Tasten (2,3) sowie der Anzeige (4) durch die Ein/Aus-Taste gesteuert wird.

3. Tastatur- und Anzeigenbeleuchtung nach Anspruch 1 oder 2, dadurch **gekennzeichnet**, daß die Beleuchtungseinrichtung mit dem Einschalten des Telefonapparates gekoppelt ist.

4. Tastatur- und Anzeigenbeleuchtung nach einem der Ansprüche 1 bis 3, dadurch **gekennzeichnet**, daß bei eingeschalteter Beleuchtungsfunktion mit jeder Taste die Beleuchtung für die vom Beleuchtungstimer vorgegebene Zeit einschaltbar ist.

## Claims

1. Keyboard and display illumination for a telephone apparatus with an illuminated keyboard and display area, characterized in that a single key (5), which is normally used for switching the telephone apparatus on and off is permanently illuminated and this key (on/off key) is designed in such a way that when it is briefly actuated, the entire illumination for the time preset by an illumination timer is switched on and the telephone apparatus is switched off by a long clock pulse.

2. Keyboard and display illumination according to Claim 1, characterized in that the illumination of the other keys (2, 3) and of the display (4) is controlled by the on/off key.

3. Keyboard and display illumination according to Claim 1 or 2, characterized in that the illumination device is coupled to the switching-on of the telephone apparatus.

4. Keyboard and display illumination in accordance with one of the Claims 1 to 3, characterized in that when the illuminating function is switched on, the illumination for the time preset by the illumination timer can be switched on using any key.

## Revendications

1. Éclairage du clavier et de l'affichage pour un appareil téléphonique comportant une zone éclairée de clavier et d'affichage, caractérisé par le fait qu'une seule touche (5) utilisée normalement pour la mise en et hors service de l'appareil téléphonique est éclairée de façon permanente, et que cette touche (touche marche/arrêt) est agencée de telle sorte que, lors d'un bref actionnement, tout l'éclairage est branché pendant un intervalle de temps déterminé à l'avance par une minuterie d'éclairage et que le débranchement de l'appareil téléphonique s'effectue au moyen d'une longue impulsion d'actionnement.

2. Éclairage du clavier et de l'affichage suivant la revendication 1, caractérisé par le fait que l'éclairage des autres touches (2,3) ainsi que de l'affichage (4) est commandé par la touche marche/arrêt.

3. Éclairage du clavier et de l'affichage suivant la revendication 1 ou 2, caractérisé par le fait que le dispositif d'éclairage est couplé au branchement de l'appareil téléphonique.

4. Éclairage du clavier et de l'affichage suivant l'une des revendications 1 à 3, caractérisé par le fait que lorsque la fonction d'éclairage est mise en service, l'éclairage pendant un intervalle de temps déterminé à l'avance par la minuterie d'éclairage peut être déclenché au moyen de chaque touche.
